# EUROPEAN PATENT SPECIFICATION

(11) **EP 2 402 226 B1**
(45) Date of publication and mention of the grant of the patent: **05.03.2014**
(21) Application number: 10168245.8
(22) Date of filing: 02.07.2010
(51) Int. Cl.: B60W 50/14, B60W 50/08, B60R 11/04, B62D 15/02, G01C 3/06, B60R 21/0134, G01C 21/36

(54) **Computer based system and method for providing a driver assist information**
Computerbasiertes System und Verfahren zur Bereitstellung unterstützende Informationen an einen Fahrer
Système informatisé et système de fourniture d'informations d'aide au conducteur

(43) Date of publication of application: 04.01.2012
(73) Proprietor: Harman Becker Automotive Systems GmbH, 76307 Karlsbad (DE)
(72) Inventor: Roth, Hans, 76187, Karlsruhe (DE); Bauer, Lee, 76228, Karlsruhe-Gruenwettersbach (DE)
(74) Representative: Bertsch, Florian Oliver

(56) References cited:
- EP-A1- 1 901 225
- EP-A2- 1 711 006
- DE-A1-102009 034 386
- GB-A- 2 441 560
- JP-A- 2006 015 803
- JP-A- 2007 087 337
- JP-A- 2010 108 507
- US-A1- 2008 297 330
- US-B1- 6 535 242

## Description

The present invention relates to a computer based system for providing a driver assist information to a driver of a vehicle, and to a method for providing the driver assist information.

### Related Art

Many vehicles are equipped with sensors and a computer based system for sensoring an environment of the vehicle and for outputting driver assist information to a driver of the vehicle. For example, a park distance control system monitors an area in front and behind of the vehicle and provides the driver of the vehicle with an assist information whether an obstacle in the monitored area is present or not. Furthermore, for example the vehicle may be equipped with a system for monitoring a section of the road in front of the vehicle to provide a driver assist information concerning a distance to a vehicle driving in front of the vehicle or concerning an obstacle, for example an accident or a person in front of the vehicle.

DE 10 2009 034 386 A1 relates to a driving assistance device for a vehicle for recognizing states in an environment of a vehicle and for providing a driving assistance for a driver of the vehicle. The assistance device comprises an obstacle determination unit configured to detect and determine an obstacle outside of the vehicle, and to detect if the obstacle is an obstacle of a first type which is visually recognizable by the driver or if the obstacle is an obstacle of a second type which is not visually recognizable by the driver. The driving assistance device comprises furthermore a driving assistance unit configured to provide a driving assistance for avoiding a collision with the obstacle, wherein a collision threat for the obstacle of the second type is rated higher than a collision threat for the obstacle of the first type.

EP 1 711 006 A2 relates to a video image processing system which processes a video image photographed by a video image photographing device. A server includes a video image type determining section and a server side transmission section. The video image type determining section determines a type of the video image scene on the basis of a landmark feature variable and a moving feature variable. The server side transmission section transmits the type of the video image scene to a terminal via a communication network. In this case, the amount of communication on the communication network can be substantially reduced in comparison to the case to transmit the video image to a server.

US 2008/0297330 A1, considered as the closest prior art, relates to a vehicle emergency preventive terminal device and internet system using facial recognition technology. A driver authentication unit of the vehicle compares a driver's face vector template, which is generated in a driver face vector template acquisition unit, and a driver's vector template stored in a driver database in order to determine whether the driver is a registered driver. If a driver's face vector template generated from the driver face vector template acquisition unit is identical to the driver's face vector template stored in the driver database, the driver authentication unit permits to start up the vehicle.

### Summary of the Invention

Despite the development of the above described systems there still remains a need for providing an improved driver assist information comprising more detailed and more useful information to the driver during a drive or during an operation of the vehicle.

This object is achieved by a method for providing a driver assist information as defined in claim 1 and a computer based system for providing a driver assist information as defined in claim 7. The dependent claims define preferred and advantageous embodiments of the invention.

The method for providing a driver assist information for a vehicle driver according to the present invention comprises the following steps. An image is captured with a capturing device of the vehicle and an object or a situation in the captured image is automatically recognized. Then, a category of a predetermined set of categories is automatically assigned to the recognized object or situation. Furthermore, an operating status of the vehicle is determined and the driver assist information is automatically generated based on the determined operating status and the assigned category.

The image may be captured with a camera capturing an environment outside the vehicle, for example in front of the vehicle, behind the vehicle or beside the vehicle, or capturing a view of an inside of the vehicle or a view of the driver of the vehicle. The predetermined set of categories may comprise categories of objects or situations commonly occurring in an environment or inside the vehicle during an operation of the vehicle. For example, the set of categories may comprise a generic obstacle or more detailed defined objects, for example a pole, a stone, a toy, a person, a child, a generic vehicle, a car, or a bicycle. In case the image comprises for example an environment behind the vehicle during the vehicle driving backwards, a more detailed information concerning an object behind the vehicle can be provided to the driver, for example by outputting the category to the driver indicating that a pole, a stone, a person, or a child is present behind the vehicle. Furthermore, the set of categories may comprise for example specific situations, for example an accident, a driver with closed eyes, or a generic dangerous situation, for example a deer crossing the road or a child playing at the curb of the road. In combination with the operating status of the vehicle, an appropriate warning may be output to the driver of the vehicle as the driver assist information. For example, when the vehicle is driving and it is detected that the driver's eyes are closed, a wake-up function of the vehicle may be activated, for example a belt pretensioner, a bell, or a vibrating device at a steering wheel of the vehicle may be activated. In case an accident in front of the vehicle is determined, depending on the current speed of the vehicle and a current brake activity of the driver, a warning to reduce the speed may be output to the driver. Furthermore, an automatic brake assist system may slow down the vehicle appropriately. Furthermore, the set of categories may comprise for example a category defining an occupied seat in the vehicle. Depending on this category, an audio system of the vehicle may be set accordingly to provide the person occupying the seat in the vehicle with audio output of the audio system of the vehicle. Moreover, based on a view of an inside of the vehicle the category indicate if a driver belongs to a group of authorized drivers which is defined for the vehicle. When the driver wants to start the vehicle, a security system of the vehicle determines if the driver belongs to the group of authorized drivers and allows starting the vehicle only if this test is passed successfully.

According to an embodiment, the generated driver assist information is output to the driver of the vehicle as a speech message. Thus, for example during parking the vehicle, detailed information about an obstacle behind the vehicle can be provided acoustically to the driver, for example by warning the driver that a child or a stone is located behind the vehicle. Therefore, the driver can adapt the driving speed and the attention accordingly for driving more carefully when a child, which may move, is detected behind the vehicle.

The captured image is transmitted to a server outside the vehicle and the category is received as a response from the server. As analyzing the captured image in real time may consume much more computing power than available inside the vehicle, this task is performed outside the vehicle by a server. The server may be any kind of web server or portal located in a data communication network, for example the internet, and may be accessible via a radio frequency transmission from the vehicle. The predetermined set of categories available in the server may be automatically adapted to latest categories implemented and available in the server. Therefore, providing a best possible driver assist information is maintained.

According to another embodiment, the operating status of the vehicle may comprise for example the vehicle driving forwards, the vehicle driving backwards, the vehicle changing a traffic lane, an operating status of an engine of the vehicle, a global position of the vehicle, or a driving speed of the vehicle.

According to the present invention, furthermore a computer based system for providing a driver assist information for a vehicle driver is provided. The system comprises a capturing device of the vehicle for capturing an image, a recognition device for recognizing an object or a situation in the captured image, and a categorizing device for assigning a category of a predetermined set of categories to the recognized object or situation. Furthermore, the system comprises a status determining device for determining an operating status of the vehicle and the driver assist device which is adapted to generate the driver assist information based on the determined operating status and the category.

According to an embodiment, the computer based system is adapted to perform the above described method or an embodiment of the above described method.

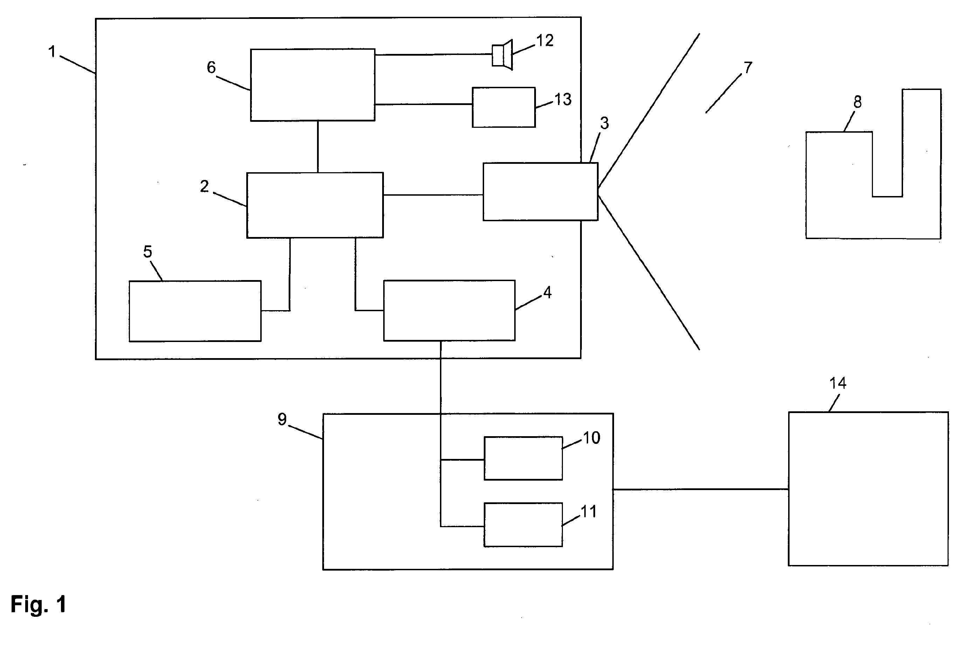

### Brief Description of the Drawing

The invention will now be described in more detail with reference to the accompanying drawing, in which the only Fig. shows a schematic view of a computer based system for providing a driver assist information according to an embodiment of the present invention.

### Detailed Description of the Drawing

The figure shows a vehicle 1 comprising a vehicle electronic system 2 connected to a capturing device 3, a transmission device 4, a vehicle status determination device 5, and a driver assist device 6. The capturing device 3 may comprise one or more cameras provided at the vehicle for capturing images of an environment inside and/or outside the vehicle. The capturing device 3 may capture images outside behind the vehicle, in front of the vehicle or beside the vehicle. The capturing device 3 may further comprise a camera for capturing images of an inside of the vehicle, for example of a driver sitting on a driver seat of the vehicle. Each capturing device 3 captures an image of an associated capturing area 7. The image captured by the capturing device 3 may comprise an object 8 or a situation within the capturing area 7.

Images captured by the capturing device 3 are passed via the vehicle electronic system 2 to the transmission device 4 and sent by the transmission device 4 to a server 9 outside the vehicle 1. The transmission between the transmission device 4 and the server 9 may comprise for example any wireless transmission, for example a UMTS, GPRS, or WLAN transmission. The server 9 may be any kind of server located in the internet or in a data communication network and may provide a portal or a website accessible by the transmission device 4. The server 9 comprises a recognition device 10 for analyzing the image captured by the capturing device 3 and for recognizing the object 8 or the situation in the captured image. Furthermore, the server 9 comprises a categorizing device 11 receiving information of the recognized object or situation from the recognition device 10 for assigning a category to the recognized object or situation. The category is selected from a predetermined set of categories comprising for example objects like a pole, a stone, a toy, a person, a child, a car, a bicycle, or a vehicle, or situations like a driver with closed eyes, an occupied seat in the vehicle or a dangerous situation on a road. The assigned category is sent from the categorizing device 11 of the server 9 to the transmission device 4 of the vehicle 1. In the vehicle 1, the category received by the transmission device 4 is forwarded by the vehicle electronic system 2 to the driver assist device 6. However, according to another embodiment, the processing performed of devices 10 and 11 may also be performed by the electronic system 2 of the vehicle if sufficient computing power is available.

The vehicle status determining device 5 provides status information of the vehicle to the vehicle electronic system 2. The vehicle status information may comprise for example a driving direction of the vehicle whether the vehicle is driving forwards or backwards or if the vehicle is changing a traffic lane, an operating status of an engine of the vehicle or whether the engine is running or not, a global position of the vehicle provided for example by a global positioning system (GPS), or a current driving speed of the vehicle. The operating status information received from the vehicle status determining device 5 is forwarded by the vehicle electronic system 2 to the driver assist device 6. The driver assist device 6 combines the vehicle status information and the category information and generates an appropriate driver assist information. The driver assist information may be output via a loudspeaker 12 or another warning device 13 of the vehicle 1 to assist the driver. Furthermore, the driver assist information is output by the driver assist determining device 6 to the vehicle electronic system 2 for directly controlling vehicle functions like a brake of the vehicle 1 or the engine of the vehicle 1 to assist the driver.

In the following, some examples of combining an operating status and a category in the driver assist device 6 for providing the driver assist information will be described in more detail.

When the driver is parking the vehicle 1 in a parking space and drives the vehicle backwards, the capturing device 3 mounted at a rear side of the vehicle 1 captures images from an area behind the vehicle 1. Images from the capturing device at the rear of the vehicle are transmitted to the server 9 and objects and situations behind the vehicle are recognized and categorized by the server 9. The category is transmitted back to the vehicle 1 and combined with the vehicle status indicating the vehicle driving backwards to a driver assistant information by the driver assistant device 6. When for example a child is playing behind the vehicle, the server 9 may determine a category like "child" or "playing child". Therefore, the driver assist device 6 may output a warning via the loudspeaker 12 to the driver indicating that a child or a playing child is present behind the vehicle. Furthermore, when the server 9 detects that a toy is lying in the capturing area 7 of the capturing device 3 behind the vehicle 1, the driver assistant device 6 may output a warning indicating that a toy is present behind the vehicle to warn the driver that a child may come close to pick up the toy.

According to another exemplary embodiment, the capturing device 3 may capture an capturing area 7 inside the vehicle, especially an area where the driver is sitting. When the vehicle is not started, that means the engine of the vehicle is not running, the driver assist device 6 may verify with the help of the server 9 if a driver sitting on the driver seat belongs to a category of drivers being authorized to use the vehicle or not. In case the driver does not belong to the category of authorized drivers, the driver assist device 6 will send an indication to the vehicle electronic system 2 to inhibit starting the engine of the vehicle 1. In case the driver recognized on the vehicle seat is categorized as being a driver of a group of authorized drivers, the driver assist device 6 will provide an indication signal to the vehicle electronic system 2 allowing to start the engine of the vehicle 1. Furthermore, during a movement of the vehicle as indicated by the vehicle status determining device 5, the driver assist device 6 may receive from the server 9 that the currently recognized driver on the driver seat is categorized as a driver having closed eyes. In this case, the driver assist device 6 may output a warning to the driver to wake up the driver. The warning may comprise for example an acoustic warning output by the loudspeaker 12 or may comprise activating a belt pretensioner of the safety belt of the driver seat to wake up the driver or activating a vibrating device at a steering wheel of the vehicle to wake up the driver.

According to another exemplary embodiment, the capturing device 3 may capture images of an inside of the vehicle 1 showing several or all seats of the vehicle 1. The server 9 may derive for each seat of the vehicle if a person is sitting on the seat or not. Based on this information, the driver assist device 6 may control for example an audio system of the vehicle to output audio information, like music, in accordance with the detected seat occupation of the vehicle. In case only the driver is present in the vehicle, the audio output of the audio system of the vehicle may be optimized for the driver only, whereas, when some more persons are present in the vehicle, the audio output of the audio system may be optimized to provide all the persons in the vehicle with audio information.

According to yet another exemplary embodiment, the capturing device 3 may capture images in a capturing area 7 in front of the vehicle. When the driver is driving the vehicle 1 along a road, the driver assist device 6 may provide a warning to the driver when an unusual situation occurs in front of the vehicle. The unusual situation may comprise for example a construction site or an accident in front of the vehicle 1. The server 9 may be adapted to analyze the images from the capturing device 3 to recognize and categorize such situations by comparing the captured image with a usual view of the capturing area 7 stored in the server 9. Usual views of areas stored in the server 9 may be retrieved with the help of a global position information of the vehicle provided by the vehicle status determining device 5 to the server 9. In case an unusual situation on the road in front of the vehicle is determined, the driver assist device 6 may output an audio warning to the driver of the vehicle or may activate a braking system of the vehicle or may reduce the speed of the vehicle by reducing the driving power of the engine of the vehicle.

The categorizing device 11 of the server 9 may be supported by a further service server 14 connected to the server 9. Furthermore, based on the category determined by the server 9, additional information may be retrieved by the server 9 from an additional service of server 14 relating to the determined category. For example, when a construction site is determined by the categorizing device 11, an additional information concerning the length of the construction site may be retrieved by the server 9 from the additional server 14 and provided as an additional information to the driver assist device 6 to be output to the driver. Furthermore, as described in the example above, when a driver with closed eyes is determined by the categorizing device 11, a shortest route to a parking lot or a hotel may be retrieved by the server 9 from the server 14 and provided via the driver assist device 6 to the driver as a proposal for making a break.

## Claims

1. A method for providing a driver assist information for a vehicle driver, the method comprising the steps of:
- capturing an image with a capturing device (3) of the vehicle (1),
- transmitting the captured image to a server (9) outside the vehicle (1), and
- determining an operating status of the vehicle (1),
**characterized by**
- automatically recognizing an object (8) or a situation in the captured image by the server (9),
- automatically assigning a category of a predetermined set of categories to the recognized object (8) or situation by the server (9),
- receiving the category from the server (9) in the vehicle (1), and
- automatically generating the driver assist information based on the determined operating status and the category, and outputting the generated driver assist information to a vehicle security system, the vehicle security system allowing operating the vehicle (1) in response to the determined operating status and the category.

2. The method according to claim 1, furthermore comprising the step of outputting the generated driver assist information as a speech message to the driver of the vehicle (1).

3. The method according to any of the preceding claims, furthermore comprising the step of outputting the generated driver assist information to a warning system (13) for the driver.

4. The method according to any of the preceding claims, wherein the image comprises an image selected from the group comprising:
- an environment outside the vehicle (1),
- an environment outside in front of the vehicle (1),
- an environment outside behind the vehicle (1),
- a view of an inside of the vehicle (1), and
- a view of a driver of the vehicle (1).

5. The method according to any of the preceding claims, wherein the predetermined set of categories comprises categories selected from the group comprising:
- an obstacle,
- a pole,
- a stone,
- a toy,
- a person,
- a child,
- a car,
- a bicylcle,
- a vehicle,
- an accident,
- a driver with closed eyes,
- a driver of a group of authorized drivers,
- an occupied seat in the vehicle, and
- a dangerous situation.

6. The method according to any of the preceding claims, wherein the operating status comprises an operating status selected from the group comprising:
- the vehicle (1) is driving forwards,
- the vehicle (1) is driving backwards,
- the vehicle (1) is changing a traffic lane,
- an operating status of a motor of the vehicle (1),
- a global position of the vehicle (1), and
- a driving speed of the vehicle (1).

7. A computer-based system for providing a driver assist information for a vehicle driver, the system comprising:
- a capturing device (3) of the vehicle (1) for capturing an image,
- a transmission device (4) of the vehicle (1) for sending the captured image to a server (9) outside the vehicle (1), and for receiving a category from the server (9),
- a status determining device (5) of the vehicle (1) for determining an operating status of the vehicle (1),
**characterized by**
- a recognition device (10) of the server (9) for recognizing an object (8) or a situation in the captured image,
- a categorizing device (11) of the server (9) for assigning a category of a predetermined set of categories to the recognized object (8) or situation,
- a driver assist device (6) for automatically generating the driver assist information based on the determined operating status and the category, and
- a vehicle security system allowing operating the vehicle (1) in response to the determined operating status and the category.

8. The system according to claim 7, wherein the system is adapted to perform the method according to any of claims 1-6.

## Patentansprüche

1. Verfahren zum Bereitstellung unterstützender Informationen an einen Fahrer eines Fahrzeugs, wobei das Verfahren folgende Schritte umfasst:
- Erfassen eines Bildes mit einer Erfassungsvorrichtung (3) des Fahrzeugs (1),
- Übertragen des erfassten Bildes an einen Server (9) außerhalb des Fahrzeugs (1), und
- Bestimmen eines Betriebsstatus des Fahrzeugs (1),
**gekennzeichnet durch**
- automatisches Erkennen eines Objekts (8) oder einer Situation im erfassten Bild durch den Server (9),
- automatisches Zuweisen einer Kategorie einer im Voraus festgelegten Gruppe von Kategorien zu dem erkannten Objekt (8) oder der erkannten Situation **durch** den Server (9),
- Empfangen der Kategorie vom Server (9) im Fahrzeug (1), und
- automatisches Erzeugen der unterstützenden Informationen für den Fahrer auf Grundlage des bestimmten Betriebsstatus und der Kategorie, und Ausgeben der erzeugten unterstützenden Informationen für den Fahrer an ein Fahrzeugsicherheitssystem, wobei das Fahrzeugsicherheitssystem es erlaubt, das Fahrzeug (1) in Reaktion auf den bestimmten Betriebsstatus und die Kategorie zu bedienen.

2. Verfahren nach Anspruch 1, ferner folgenden Schritt umfassend: Ausgeben der erzeugten unterstützenden Informationen für den Fahrer als eine Sprachnachricht an den Fahrer des Fahrzeugs (1).

3. Verfahren nach einem der vorangehenden Ansprüche, ferner folgenden Schritt umfassend: Ausgeben der erzeugten unterstützenden Informationen für den Fahrer an ein Warnsystem (13) für den Fahrer.

4. Verfahren nach einem der vorangehenden Ansprüche, wobei das Bild ein Bild umfasst, das aus der Gruppe ausgewählt wird, die Folgendes umfasst:
- eine Umgebung außerhalb des Fahrzeugs (1),
- eine Außenumgebung vor dem Fahrzeug (1),
- eine Außenumgebung hinter dem Fahrzeug (1),
- eine Ansicht eines Inneren des Fahrzeugs (1), und
- eine Ansicht eines Fahrers des Fahrzeugs (1).

5. Verfahren nach einem der vorangehenden Ansprüche, wobei die im Voraus festgelegte Gruppe von Kategorien Kategorien umfasst, die aus der Gruppe ausgewählt werden, die Folgendes umfasst:
- ein Hindernis,
- einen Pfosten,
- einen Stein,
- ein Spielzeug,
- eine Person,
- ein Kind,
- ein Automobil,
- ein Fahrrad,
- ein Fahrzeug,
- einen Unfall,
- einen Fahrer mit geschlossenen Augen,
- einen Fahrer einer Gruppe zugelassener Fahrer,
- einen besetzten Sitz im Fahrzeug, und
- eine gefährliche Situation.

6. Verfahren nach einem der vorangehenden Ansprüche, wobei der Betriebsstatus einen Betriebsstatus umfasst, der aus der Gruppe ausgewählt wird, die Folgendes umfasst:
- Vorwärtsfahren des Fahrzeugs (1),
- Rückwärtsfahren des Fahrzeugs (1),
- Spurwechsel des Fahrzeugs (1),
- Betriebsstatus eines Motors des Fahrzeugs (1),
- eine globale Position des Fahrzeugs (1), und
- eine Fahrgeschwindigkeit des Fahrzeugs (1).

7. Computerbasiertes System zum Bereitstellen von unterstützenden Informationen an einen Fahrer eines Fahrzeugs, wobei das System Folgendes umfasst:
- eine Erfassungsvorrichtung (3) des Fahrzeugs (1) zum Erfassen eines Bildes,
- eine Übertragungsvorrichtung (4) außerhalb des Fahrzeugs (1) zum Senden des erfassten Bildes an einen Server (9) außerhalb des Fahrzeugs (1) und zum Empfangen einer Kategorie vom Server (9),
- eine Statusbestimmungsvorrichtung (5) des Fahrzeugs (1) zum Bestimmen eines Betriebsstatus des Fahrzeugs (1),
**gekennzeichnet durch**
- eine Erkennungsvorrichtung (10) des Servers (9) zum Erkennen eines Objekts (8) oder einer Situation im erfassten Bild,
- eine Kategorisierungsvorrichtung (11) des Servers (9) zum Zuweisen einer Kategorie einer im Voraus festgelegten Gruppe von Kategorien zu dem erkannten Objekt (8) oder der erkannten Situation,
- eine Fahrerunterstützungsvorrichtung (6) zum automatischen Erzeugen der unterstützenden Informationen für den Fahrer anhand des bestimmten Betriebsstatus und der Kategorie, und
- ein Fahrzeugsicherheitssystem, das es erlaubt, das Fahrzeug (1) in Reaktion auf den bestimmten Betriebsstatus und die Kategorie zu bedienen.

8. System nach Anspruch 7, wobei das System dazu ausgebildet ist, das Verfahren nach einem der Ansprüche 1-6 auszuführen.

## Revendications

1. Procédé d'apport d'informations d'assistance à un conducteur destiné à un conducteur de véhicule, ce procédé comprenant les étapes suivantes :
- capture d'une image à l'aide d'un dispositif (3) de capture d'images du véhicule (1),
- transmission de l'image capturée à un serveur (9) situé en dehors du véhicule (1), et
- détermination d'un statut de fonctionnement du véhicule (1),
**caractérisé par**
- la reconnaissance automatique d'un objet (8) ou d'une situation dans une image capturée par le serveur (9),
- l'attribution automatique d'une catégorie d'un ensemble prédéterminé de catégories vers l'objet reconnu (8) ou vers la situation par le serveur (9),
- la réception de la catégorie à partir du serveur (9) dans le véhicule (1), et
- la production automatique des informations d'assistance du conducteur en fonction du statut et de la catégorie déterminés d'opération, et la transmission des informations générées d'assistance au conducteur à un système de sécurité du véhicule, le système de sécurité du véhicule permettant le fonctionnement du véhicule (1) en réponse au statut et à la catégorie déterminés d'opération.

2. Procédé selon la revendication 1, comprenant en outre l'étape de transmission des informations générées d'assistance au conducteur sous la forme d'un message parlé destiné au conducteur du véhicule (1).

3. Procédé selon l'une quelconque des revendications précédentes, comprenant en outre l'étape de transmission des informations générées d'assistance au conducteur à un système d'avertissement (13) destiné au conducteur.

4. Procédé selon l'une quelconque des revendications précédentes, dans lequel l'image comprend une image choisie dans l'ensemble constitué :
- d'un environnement situé en dehors du véhicule (1),
- d'un environnement situé en dehors devant le véhicule (1),
- d'un environnement situé en dehors derrière le véhicule (1),
- d'une vue d'une partie intérieure du véhicule (1), et
- d'une vue d'un conducteur du véhicule (1).

5. Procédé selon l'une quelconque des revendications précédentes, dans lequel l'ensemble prédéterminé de catégories comprend des catégories choisies dans l'ensemble comprenant :
- un obstacle,
- un poteau,
- une pierre,
- un j jouet,
- une personne,
- un enfant,
- une voiture,
- une bicyclette,
- un véhicule,
- un accident,
- un conducteur dont les yeux sont fermés,
- un conducteur qui fait partie d'un groupe de conducteurs,
- un siège occupé dans le véhicule, et
- une situation dangereuse.

6. Procédé selon l'une quelconque des revendications précédentes, dans lequel le statut de fonctionnement comprend un statut de fonctionnement choisi dans l'ensemble comprenant :
- le véhicule (1) avance,
- le véhicule (1) recule,
- le véhicule (1) change de voie de circulation,
- un statut de fonctionnement d'un moteur du véhicule (1),
- une position globale du véhicule (1), et
- une vitesse de circulation du véhicule (1).

7. Système informatique permettant de donner des informations d'assistance à un conducteur destiné à un conducteur de véhicule, ce système comprenant :
- un dispositif de capture (3) du véhicule (1) permettant de capturer une image,
- un dispositif de transmission (4) du véhicule (1) permettant d'envoyer l'image capturée à un serveur (9) en dehors du véhicule (1) et de recevoir une catégorie à partir du serveur (9),
- un dispositif de détermination de statut (5) du véhicule (1) permettant de déterminer un statut d'opération du véhicule (1),
**caractérisé par**
- un dispositif de reconnaissance (10) du serveur (9) permettant de reconnaître un objet (8) ou une situation dans l'image capturée,
- un dispositif de catégorisation (11) du serveur (9) permettant d'attribuer une catégorie d'un ensemble prédéterminé de catégories vers l'objet reconnu (8) ou vers la situation,
- un dispositif (6) d'assistance au conducteur permettant de générer automatique les informations d'assistance au conducteur en fonction du statut et de la catégorie déterminés d'opération, et
- un système de sécurité de véhicule permettant d'opérer le véhicule (1) en réponse au statut et de la catégorie déterminés d'opération.

8. Système selon la revendication 7, dans lequel le système est conçu pour mettre en oeuvre le procédé selon l'une quelconque des revendications 1 à 6.
